# EUROPÄISCHE PATENTSCHRIFT

(11) **EP 2 719 575 B1**
(45) Veröffentlichungstag und Bekanntmachung des Hinweises auf die Patenterteilung: **24.02.2016**
(21) Anmeldenummer: 13187686.4
(22) Anmeldetag: 08.10.2013
(51) Int. Cl.: B60N 2/66, B60N 2/68, B60N 2/22, B60N 2/20, B60N 2/24, B60N 2/02, B60N 2/64, B60N 2/28, B60N 2/42, B60N 2/427

(54) **Fahrzeugsitz mit veränderbarer Rückenlehnenform**
Vehicle seat with variable backrest shape
Siège de véhicule doté d'une forme de dossier pouvant être modifiée

(30) Priorität: 11.10.2012 DE 102012109710
(43) Veröffentlichungstag der Anmeldung: 16.04.2014
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A1- 0 347 842
- WO-A1-2008/031218
- DE-A1- 3 046 049
- DE-B- 1 258 740
- JP-A- 2007 119 202
- US-B2- 6 910 736

## Beschreibung

Die Erfindung betrifft einen Fahrzeugsitz nach dem Oberbegriff des Patentanspruches 1.

Derartige Sitze sind in einer Vielzahl verschiedener Ausbildungen bekannt. Der Sitzflächenrahmen und der Rückenlehnenrahmen des Sitzrahmens können hierbei unterschiedlich gebildet gepolstert sein. Solche bekannte Sitze sind zwar in ihrer Sitzkontur und in ihrer Rückenlehnenkontur veränderbar, aber in der Regel nicht der Ergonomie eines Benutzers genügend angepasst, so dass der Komfort entsprechend eingeschränkt und der Rücken des Benutzer nicht in jeder Position ausreichend durch den Rückenlehnenrahmen abgestützt ist, was gegebenenfalls zu Rückenbeschwerden führen kann.

So ist beispielsweise aus der DE 4405397 C1 ein Fahrzeugsitz bekannt, dessen Rückenlehnenrahmen in mehrere gegeneinander um eine vertikale Drehachse verschwenkbare Teilsegmente untergliedert ist.

Ein mit einem derartig bewegbaren Rückenlehnenrahmen ausgestatteter Fahrzeugsitz ermöglicht zwar, zum einen hinter dem Sitz liegende Betätigungsorgane für den Benutzer leichter erreichbar zu machen und zum anderen, dass durch ein Drehen des Oberkörpers des Benutzers zur Fahrzeugmitte auch für hinten sitzende Fahrgäste in einem zwei Seitentüren aufweisenden Kraftwagen ein einfacher Durchstieg erreicht wird, ohne dass die vorn Sitzenden gezwungen sind, das Fahrzeug zu verlassen.

Allerdings ist dieser bewegbare Rückenlehnenrahmen nicht optimal an die Ergonomie des Menschen angepasst, so dass der Benutzer eines solchen Fahrzeugsitzes unter Umständen nicht den nötigen Sitzkomfort erhalten kann, sondern gegebenenfalls auch Rückenbeschwerden durch die Benutzung eines solchen Fahrzeugsitzes in Kauf nehmen muss.

Weiterhin ist aus US6910736 B2 ein Fahrzeugsitz mit den Merkmalen des Oberbegriffs vom Anspruch 1 bekannt.

Demzufolge liegt der vorliegenden Erfindung die Aufgabe zugrunde, einen Fahrzeugsitz zur Verfügung zu stellen, der besser an die Ergonomie des menschlichen Rückens, insbesondere bei Drehbewegungen des Rückens, angepasst ist und somit zugleich einen erhöhten Sitzkomfort derjenigen Person zur Verfügung stellt, die diesen Fahrzeugsitz benutzt.

Diese Aufgabe wird durch die Merkmale des Patentanspruches 1 gelöst. Vorteilhafte Ausgestaltungen der Erfindung finden sich in den abhängigen Patentansprüchen.

Kerngedanke der Erfindung ist es, dass bei einem Fahrzeugsitz umfassend einen Sitzrahmen mit einen Sitzflächenrahmen und einem Rückenlehnenrahmen letzterer eine linke Rückenlehnenlängsstrebe und eine rechte Rückenlehnenlängsstrebe sowie eine untere Querstrebe und eine obere Querstrebe aufweist, wobei die die rechte und linke Rückenlehnenlängsstreben gegen einen Widerstand derart verschwenkbar an der unteren Querstrebe angeordnet sind, dass der Rückenlehnenrahmen helixförmig deformierbar ist. Durch diese Ausgestaltung ist es möglich, dass eine im einem solchen erfindungsgemäßen Fahrzeugsitz sitzende Person nun ihren Rücken beziehungsweise ihren Oberkörper, während sie sich mit dem Rücken an dem in der Regel mit einem Polster versehenen Rückenlehnenrahmen abstützt, nach links oder rechts drehen, hat der Rückenlehnerahmen immer Kontakt mit dem Rücken des Benutzers, der sich an diesen somit entlastend abstützt. Der Rückenlehnenrahmen verdreht sich dabei derart, dass die rechte und linke Rückenlehnenlängsstreben unterschiedlich verschwenken, wobei sie durch die obere Querstrebe verbunden bleiben und der gesamte Rückenlehnenrahmen sich somit helixförmig verformt. Das Verschwenken der linken und rechten Rückenlehnenlängsstrebe kann dabei zum einen derart erfolgen, dass beide in Längsrichtung des Fahrzeugsitzes nach hinten aber in unterschiedlichen Winkeln verschwenkt werden. Zum anderen ist auch Verschwenken denkbar bei dem die linke oder rechte Rückenlehnenlängsstrebe in Längsrichtung des Fahrzeugsitzes nach vorne und die andere Rückenlehnenlängsstrebe in Längsrichtung des Fahrzeugsitzes nach hinten verschwenkt wird. Dadurch dass dieses Verschwenken jeweils gegen einen Widerstand erfolgt, unterstützt der Rückenlehnenrahmen des erfindungsgemäßen Fahrzeugsitzes den Benutzer beim Drehen des Rücken beziehungsweise des Oberkörpers in seine Ausgangsstellung, da durch den Widerstand eine Rückstellkraft aufbaubar ist, die beim Drehen in die Ausgangsstellung abgebaut wird. Somit ist auch gewährleistet, das der gesamte Rückenlehnenrahmen auch während des Drehens in die Ausgangsstellung den Rücken des Benutzers bei seiner Drehbewegung vollflächig kontaktiert und entlastet, da er die Drehbewegung durch Abbau der Rückstellkraft unterstützt.

Nach einem ersten weiteren Gedanken der Erfindung weist der Rückenlehnenrahmen zusätzlich mittlere Rückenlehnenlängsstrebe auf, die um eine im Wesentlichen horizontale Achse verschwenkbar an der unteren Querstrebe befestigt ist, wobei die rechte und linke Rückenlehnenlängsstreben zumindest im Bereich ihrer oberen Enden außerhalb eines fiktiven durch eine 360° Drehung der mittleren Rückenlehnenlängsstrebe gebildeten Flächenelementes angeordnet ist. Durch diese erfindungsgemäße Ausgestaltung des Rückenlehnenrahmens eines Sitzrahmens eines Fahrzeugsitzes ist die Verformung des Rückenlehnenrahmens optimal an die Ergonomie des Menschen, insbesondere bei Drehbewegungen des Rückens beziehungsweise des Oberkörpers eines Fahrzeugsitzbenutzers, angepasst. Die einzelnen Elemente des Rückenlehnenrahmens sind dabei einzelnen Elementen des menschlichen Rückens zugeordnet und bilden deren Bewegung während des Drehens des Rückens beziehungsweise des Oberkörpers eines Benutzers nahezu identisch ab. So ist die mittlere Rückenlehnenlängsstrebe mit der Wirbelsäule des Menschen vergleichbar, während die untere und obere Querstrebe die Hüft- beziehungsweise Schulterachse des Menschen abbilden. Die linke und rechte Rückenlehnenlängsstrebe können mit dem Muskel- und Bandapparat des menschlichen Rückens verglichen werden.

Dreht eine in einem solchen erfindungsgemäßen Fahrzeugsitz sitzende Person nun ihren Rücken beziehungsweise ihren Oberkörper, während sie sich mit dem Rücken an dem in der Regel mit einem Polster versehenen Rückenlehnenrahmen abstützt, so verdreht sich die Schulterachse der Person gegenüber ihrer Hüftachse, wobei der Muskel- und Bandapparat zusammen mit der Wirbelsäule helixartig beziehungsweise torsionsmäßig verdreht wird. In gleicher Weise verdrehen sich bei dem erfindungsgemäßen Fahrzeugsitz die rechte, linke und mittlere Rückenlehnenlängsstrebe helixförmig beziehungsweise torsionsmäßig gegeneinander, wobei diese durch die obere und untere Querstrebe verbunden bleiben. Durch diese ergonomische Ausgestaltung des Rückenlehnenrahmens ist nicht nur der Komfort des Fahrzeugsitzbenutzers gesteigert, vielmehr sind auch durch die dauerhafte und zuverlässige Kontaktierung seines Rückens mit dem in der Regel gepolsterten Rückenlehnerahmens auch während Drehbewegungen des Rückens Rückenbeschwerden vorgebeugt, da der Rückenlehnenrahmen Belastungen aufnehmen kann, die folglich nicht durch den Band- und Muskelapparat des Benutzers abgefangen werden müssen.

Nach einem weiteren Gedanken der Erfindung ist die obere Querstrebe in ein zwischen linker Rückenlehnenlängsstrebe und mittlerer Rückenlehnenlängsstrebe angeordnetes erstes Querstrebenteil und ein zwischen rechter Rückenlehnenlängsstrebe und mittlerer Rückenlehnenlängsstrebe angeordnetes Querstrebenteil zweigeteilt. Durch diese Ausgestaltung der Erfindung ist der erfindungsgemäße Fahrzeugsitz nochmals in verbesserter Form der Ergonomie des Menschen angepasst, da es sich nun bei der oberen Querstrebe wie bei der Schulterachse eines Menschen nicht um eine starre Achse handelt.

Damit die Ergonomie der Schulter nochmals verbessert durch den erfindungsgemäßen Fahrzeugsitz abgebildet werden kann, hat es als vorteilhaft erwiesen, dass das erste Querstrebenteil in Aufnahmen an der linker Rückenlehnenlängsstrebe und der mittlerer Rückenlehnenlängsstrebe und das zweite Querstrebenteil in Aufnahmen an der rechten Rückenlehnenlängsstrebe und der mittlerer Rückenlehnenlängsstrebe vorzugsweise gelenkig gehalten ist. Hierbei weist der gesamte obere Bereich des Rückenlehnenrahmens eine im Wesentlichen der Beweglichkeit des Menschen im Schulterbereich entsprechende Beweglichkeit auf, so dass Bewegungen des Rücken, insbesondere Dreh- und Torsionsbewegungen des Rückens besonders gut mit dem erfindungsgemäßen Sitz unterstützt werden können, was wiederum den Sitzkomfort erhöht und die Wahrscheinlichkeit von Rückenbeschwerden minimiert.

Um unterschiedlichen Sitzpositionen von Benutzern des erfindungsgemäßen Fahrzeugsitzes hinsichtlich der Rückenlehenneigung gerecht zu werden, hat es sich bewährt, die untere Querstrebe gegenüber dem Sitzflächenrahmen um eine im Wesentlichen senkrecht zur Sitzlängsrichtung verlaufende horizontale Achse verschwenkbar auszubilden.

Damit in einfacher Weise die helixförmige beziehungsweise torsionsmäßige Verdrehung realisiert werden kann, weist die untere Querstrebe zum einen einen mittigen Bereich, an dem die mittlere Rückenlehnenlängsstrebe angeordnet ist und zum anderen zwei davon in Sitzlängsrichtung um einen Winkel abgewinkelte Bereiche auf, an denen die linke Rückenlehnenlängsstrebe und die rechte Rückenlehnenlängsstrebe angeordnet sind.

Um dabei möglichst realistische helixförmige Verdrehungen des Rückenlehnenrahmens verwirklichen zu können und gleichzeitig im Seitenbereich eine ausreichende Abstützwirkung für einen Benutzer des erfindungsgemäßen Fahrzeugsitzes zu erzielen, hat es sich bewährt, dass dieser Winkel vorzugsweise 45° beträgt.

Grundsätzlich ist es zwar möglich, dass die linke und rechte Rückenlehnenlängsstrebe fest an der unteren Querstrebe fixiert ist, wobei die helixförmige Verdrehung dann über elastische Eigenschaften der linken und der rechten Rückenlehenlängsstrebe über ihre Längserstreckung realisiert wird. Allerdings bietet es sich an, dass die linke Rückenlehnenlängsstrebe um eine Achse verschwenkbar an dem einen abgewinkelten Bereich und die rechte Rückenlehnenlängsstrebe um eine weitere Achse verschwenkbar an dem anderen abgewinkelten Bereich angeordnet ist.

Damit eine möglichst komfortable und angenehme Sitzposition erreicht werden kann, ist die mittlere Rückenlehnenlängsstrebe im Wesentlichen flach, als sich längserstreckendes Bauteil ausgebildet. Hierdurch kann der Druck, der von dem Rücken eines Fahrzeugsitzbenutzers auf den Rückenlehnenrahmen ausgeübt wird, großflächig über die mittlere Rückenlehnenlängsstrebe abgeführt werden, ohne dass Druckstellen im Rückenbereich des Benutzers durch kleine Flächenbereiche, eventuell durch eine Polsterung des Rückenlehnenrahmens hindurch, auf den Rücken des Benutzers einwirken.

In die gleich Richtung zielt die Ausgestaltung, dass die linke Rückenlehnenlängsstrebe im Wesentlichen flach ausgebildet ist, wobei deren oberes Ende gegenüber dem unteren Ende um einen Winkel abgewinkelt ist, und dass die rechte Rückenlehnenlängsstrebe im Wesentlichen flach ausgebildet ist, wobei deren oberes Ende gegenüber dem unteren Ende um den gleichen Winkel abgewinkelt ist.

Die Materialauswahl für die die Rückenlehnenlängsstrebe und die Querstreben ist vielfältig, wird aber in der Regel aus Metall oder Kunststoff erfolgen, da diese Materialen hinsichtlich ihrer Formstabilität und Elastizität in vielen Bereiche in der Fahrzeugtechnik bereits erprobt und auf die unterschiedlichsten Anforderungen anpassbar sind, wobei sie immer noch allerhöchsten Sicherheitsansprüchen beziehungsweise -standards genügen.

Die untere Querstrebe kann dabei zum einen als integraler Bestandteil des Sitzflächenrahmens einstückig mit diesem beziehungsweise einem Teil davon ausgebildet sein.

Andererseits ist es natürlich auch denkbar, dass die untere Querstrebe als separates Bauteil an dem Sitzflächenrahmen angeordnet ist, vorzugsweise über Befestigungswinkel, in welchen sie verschwenkbar um die Achse gehalten ist.

Nach einem weiteren Gedanken der Erfindung kann vorgesehen sein, dass zumindest die mittlere Rückenlehenlängsstrebe beim Verschwenken eine Rückstellkraft, vorzugsweise eine durch eine Feder erzeugte Rückstellkraft aufbaut. Durch diese Maßnahme ist sichergestellt, dass der Rückenlehnenrahmen eine Stabilität aufweist, die nicht bereits bei dem geringsten Krafteintrag aus ihrer Ruheposition gemäß einer Grundstellung ausgelenkt wird. Ferner stellt eine solche Rückstellkraft auch sicher, dass die Drehbewegung zurück zur Grundstellung durch den Rückenlehnenrahmen unterstützt wird.

Zusätzlich zur mittleren Rückenlehnenlängsstrebe können natürlich auch die rechte und die linke Rückenlehenlängsstrebe während ihres Verschwenken aus ihrer Ruhelage gemäß einer Grundstellung eine Rückstellkraft, vorzugsweise eine durch eine Feder erzeugte Rückstellkraft aufbauen, wodurch die Rückführung des aus seiner Ruhelage entsprechend einer Grundposition heraus verschwenkten Rückenlehnenrahmens besonders gleichmäßig verläuft.

Nach einem eigenständigen Gedanken der Erfindung soll auch ein Fahrzeug mit wenigstens einem zuvor beschriebenen Fahrzeugsitz geschützt sein.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel eines Sitzrahmens eines erfindungsgemäßen Fahrzeugsitzes in einer Grundstellung in einer Draufsicht von oben,
- Figur 2:: der Sitzrahmen gemäß Figur 1 in einer Ansicht von hinten,
- Figur 3:: der Sitzrahmen gemäß Figur 1 in einer Seitenansicht,
- Figur 4:: der Sitzrahmen gemäß Figur 1 in einer perspektivischen Ansicht,
- Figur 5:: das Ausführungsbeispiel des Sitzrahmens gemäß Figur 1 in einer nach links verschwenkten Stellung in einer Draufsicht von oben,
- Figur 6:: der Sitzrahmen gemäß Figur 5 in einer Ansicht von hinten,
- Figur 7:: der Sitzrahmen gemäß Figur 5 in einer Seitenansicht,
- Figur 8:: der Sitzrahmen gemäß Figur 5 in einer perspektivischen Ansicht,
- Figur 9:: das Ausführungsbeispiel des Sitzrahmens gemäß Figur 1 in einer nach rechts verschwenkten Stellung in einer Draufsicht von oben,
- Figur 10:: der Sitzrahmen gemäß Figur 9 in einer Ansicht von hinten,
- Figur 11:: der Sitzrahmen gemäß Figur 9 in einer Seitenansicht und
- Figur 12:: der Sitzrahmen gemäß Figur 9 in einer perspektivischen Ansicht.

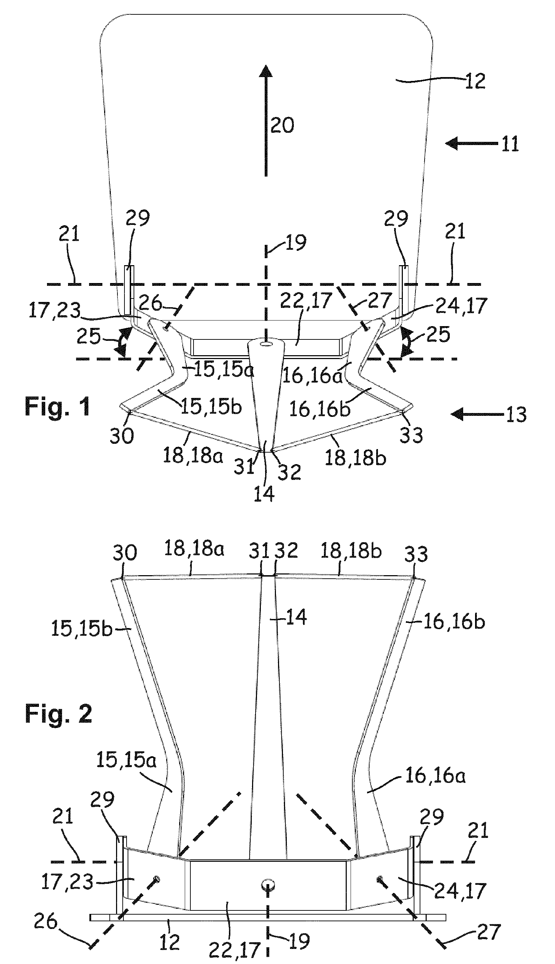

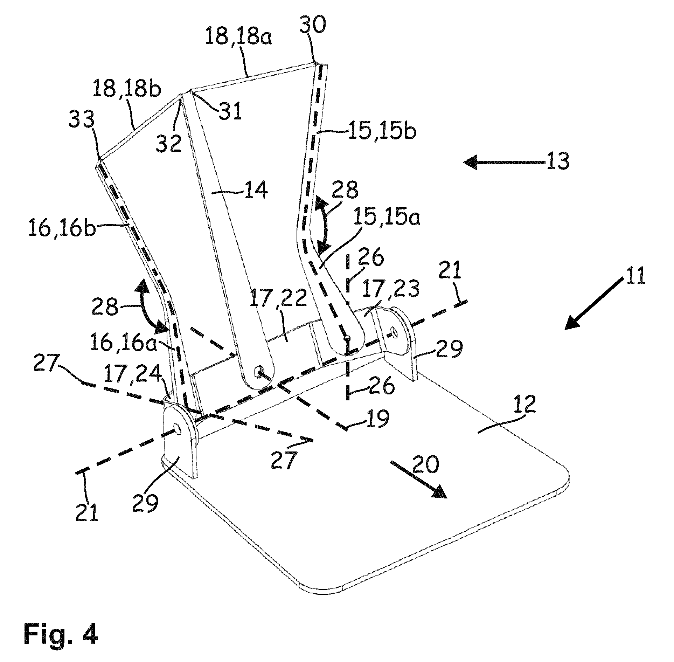

Die Figuren 1 bis 4 zeigen verschiedene Darstellungen eines Ausführungsbeispiels eines Sitzrahmens 11 eines erfindungsgemäßen Fahrzeugsitzes in einer Grundstellung, die eingenommen wird, wenn der Rücken beziehungsweise der Oberkörper des Fahrzeugsitzbenutzers nicht verdreht ist. Der Sitzrahmen 11 besteht im Wesentlichen aus einem Sitzflächenrahmen 12 und einem daran in seiner Neigung verschwenkbar angeordneten Rückenlehnenrahmen 13. Im vorliegenden Ausführungsbeispiel ist der Rückenlehnenrahmen 13 an Befestigungswinkeln 29, welche fest an dem Sitzflächenrahmen 12 angeordnet beziehungsweise fixiert sind, um eine Achse 21 verschwenkbar angeordnet.

Der Rückenlehnenrahmen 13 besteht im Wesentlichen aus einer mittleren, einer linken und einer rechten Rückenlehnenlängsstrebe 14, 15 und 16 welche mittels einer unteren und einer oberen Querstrebe 17 und 18 miteinander verbunden sind.

Die untere Querstrebe 17 ist vorliegend aus einem mittleren Bereich 22 und daran angeordneten in Fahrzeugsitzlängsrichtung 20 abgewinkelten Bereichen 23 und 24 gebildet. Die Bereiche 23 und 24 sind dabei um einen Winkel 25, der in diesem Ausführungsbeispiel in etwa 45° beträgt, abgewinkelt. Die mittlere Rückenlehnenlängsstrebe 14 ist dabei um eine horizontale Achse 19 verschwenkbar an dem mittleren Bereich 22 der unteren Querstrebe 17 angeordnet, während die linke Rückenlehnenlängsstrebe 15 an dem abgewinkelten Bereich 23 um eine Achse 26 und die rechte Rückenlehnenlängsstrebe 16 an dem abgewinkelten Bereich 24 um eine Achse 27 verschwenkbar angeordnet ist.

Die obere Querstrebe 18 ist in diesem Ausführungsbeispiel zweigeteilt ausgeführt, wobei ein erstes Querstrebenteil 18a die mittlere und linke Rückenlehnenlängsstrebe 14 und 15 miteinander verbindet, während ein zweites Querstrebenteil 18b die mittlere und rechte Rückenlehnenlängsstrebe 14 und 16 miteinander verbindet. Dabei sind die Querstrebenteile 18a und 18b allerdings nicht an den Rückenlehnenlängsstrebe 14, 15 und 16 fest fixiert sondern in Aufnahmen 30, 31, 32 und 33 gelenkig gehalten.

Sowohl die linke als auch die rechte Rückenlehnenlängsstrebe 15, 16 ist hierbei winkelig ausgebildet. Die linke Rückenlehnenlängsstrebe 15 lässt sich somit in ein unteres Ende 15a und ein oberes Ende 15b und die rechte Rückenlehnenlängsstrebe 16 in ein unteres Ende 16a und ein oberes Ende 16b einteilen. Die Winkel 28 zwischen dem jeweiligen unteren und oberen Ende 15a, 16a und 15b, 16b sind dabei gleich, jedoch ebenso wie die Anordnung der linken und rechten Rückenlehnenlängsstrebe 15 und 16 an der unteren Querstrebe 17 spiegelsymmetrisch orientiert.

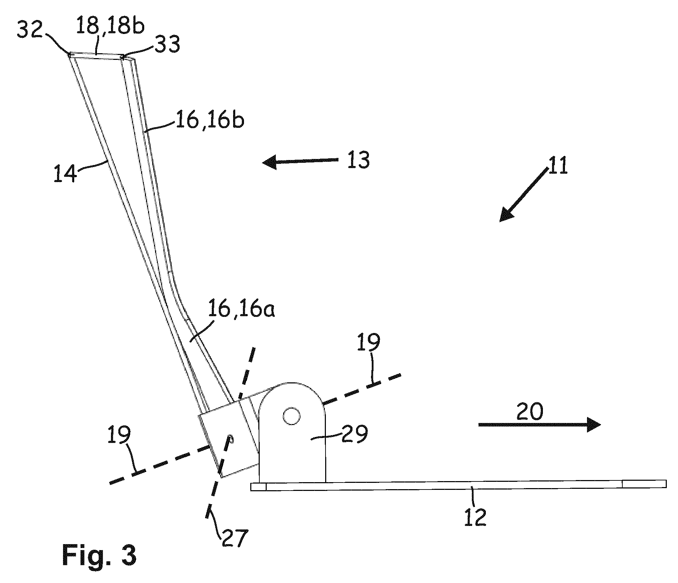

Wie insbesondere der Figur 3 zu entnehmen ist, verdeckt die rechte Rückenlehnenlängsstrebe 16 in dieser Grundstellung in einer Seitenansicht die linke Rückenlehnenlängsstrebe 15.

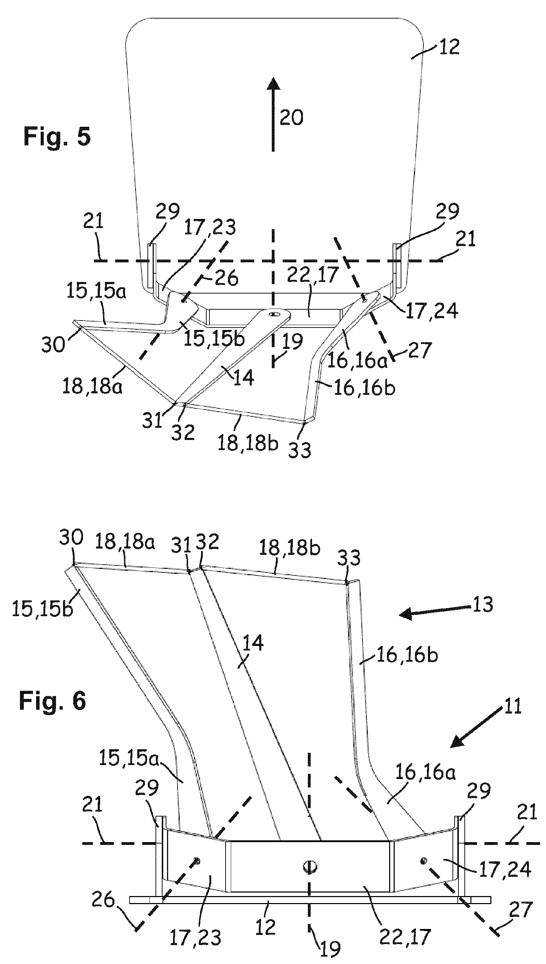

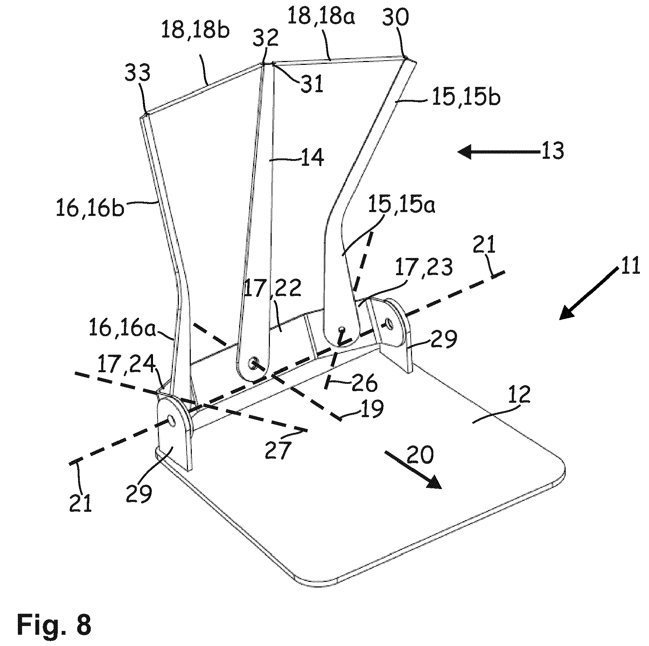

Die Figuren 5 bis 8 zeigen nunmehr das Ausführungsbeispiel der Figuren 1 bis 4, wobei der Rückenlehnenrahmen 13 nach links verschwenkt ist, was einer Rücken- beziehungsweise Oberkörperdrehung der in dem Fahrzeugsitz sitzenden Person nach rechts entspricht. Dabei ist die linke Rückenlehnenlängsstrebe 15 um die Achse 26, die mittlere Rückenlehnenlängsstrebe 14 um die Achse 19 und die rechte Rückenlehnenlängsstrebe 16 um die Achse 27 nach links verschwenkt.

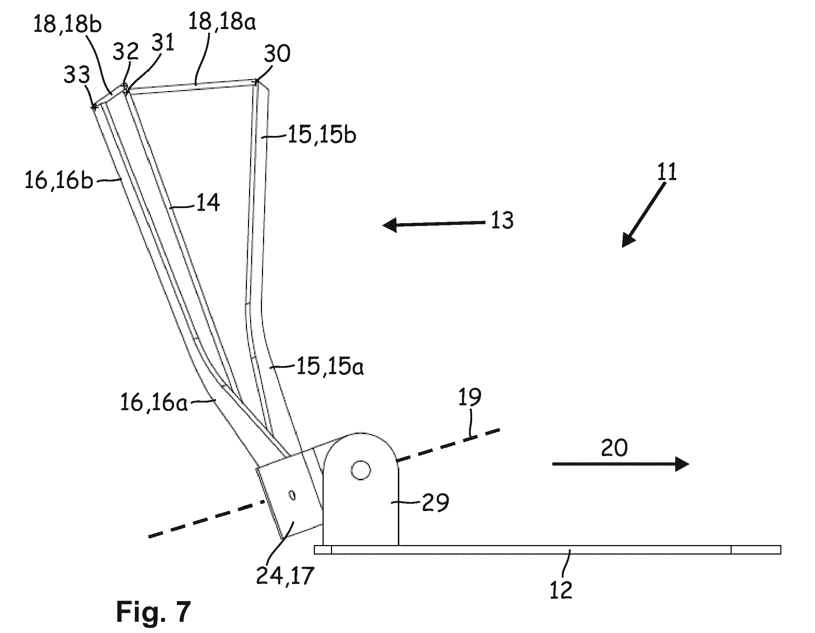

Wie insbesondere den Figuren 5 und 7 zu entnehmen ist, hat sich die rechte Rückenlehnenlängsstrebe 16 dabei sowohl mit ihrem unteren Ende 16a als auch mit ihrem oberen Ende 16b in Bezug auf die Sitzlängsrichtung 20 nach hinten bewegt, während sich die linke Rückenlehnenlängsstrebe 15 dabei sowohl mit ihrem unteren Ende 15a als auch mit ihrem oberen Ende 15b in Bezug auf die Sitzlängsrichtung 20 nach vorne bewegt hat. In Folge dieser Bewegung hat sich der gesamte Rückenlehnenrahmen 13 helixförmig verformt, da die Rückenlehnenlängsstreben 14, 15 und 16 an der unteren Querstrebe 17 an Ihren Drehpunkten dort fixiert und deshalb in ihrer Orientierung dort fest sind.

Im Gegensatz dazu ist die Querstrebe 18 durch ihre Zweiteilung und einer gelenkigen Lagerung der beiden Querstrebenteile 18a und 18b in den Aufnahmen 30 bis 33 der Rückenlehnenlängsstreben 14, 15 und 16 in Ihrer Position nicht fixiert, sondern kann der Bewegung der Rückenlehnenlängsstreben 14, 15 und 16 während des Verschwenkens um die Achsen 19, 26 und 27 folgen.

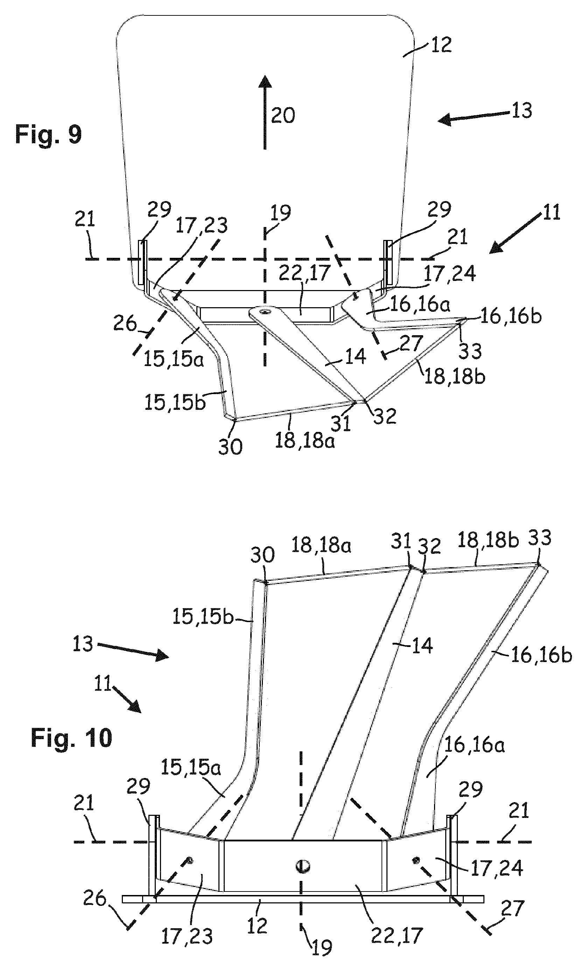

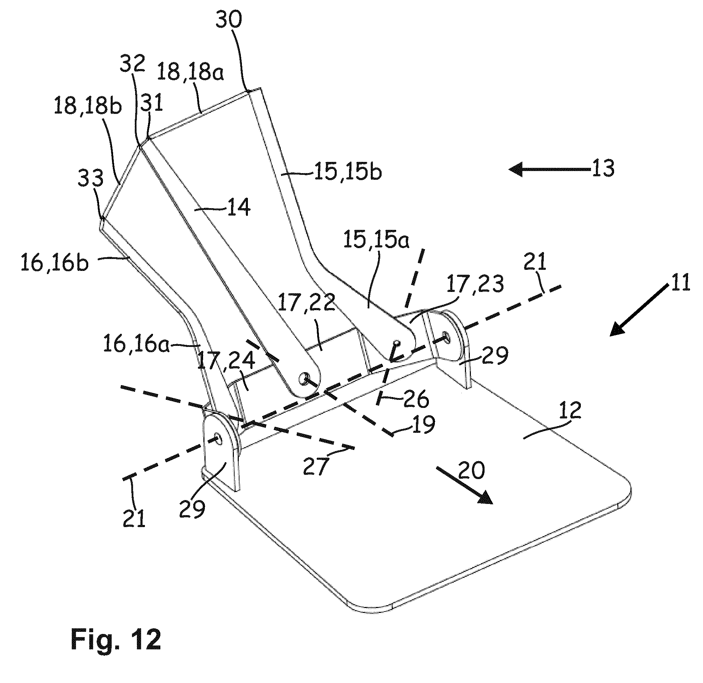

In den Figuren ist eine Federkraftbeaufschlagung der Rückenlehnenstreben 14, 15 und 16 nicht explizit dargestellt. Allerdings wird dadurch vorteilhaft erreicht, dass die verschwenkten Rückenlehnenstreben 14, 15 und 16 aus ihrer verschwenkten Position gemäß den Figuren 5 bis 8 oder auch den Figuren 9 bis 12 nahezu selbsttätig in ihre Grundstellung gemäß den Figuren 1 bis übergehen, ohne dass die in dem Fahrzeugsitz sitzende Person dazu Kraft aufwenden muss. Ein Kraftaufwand ist allerdings notwendig, um dieses Verschwenken aus der Ruheposition gemäß den Figuren 1 bis 4 zu realisieren. Dies ist allerdings auch gewünscht, damit nicht schon geringe äußere Einflüsse, wie sie beispielsweise bereits bei Kurvenfahrten durch Zentrifugalbeschleunigungen auftreten können, ein ungewünschtes Verschwenken verursachen.

Die Figuren 9 bis 12 zeigen nunmehr das Ausführungsbeispiel der Figuren 1 bis 4, wobei der Rückenlehnenrahmen 13 nach rechts verschenkt ist, was einer Rücken- beziehungsweise Oberkörperdrehung der in dem Fahrzeugsitz sitzenden Person nach links entspricht. Dabei ist die linke Rückenlehnenlängsstrebe 15 um die Achse 26, die mittlere Rückenlehnenlängsstrebe 14 um die Achse 19 und die rechte Rückenlehnenlängsstrebe 16 um die Achse 27 nach rechts verschwenkt.

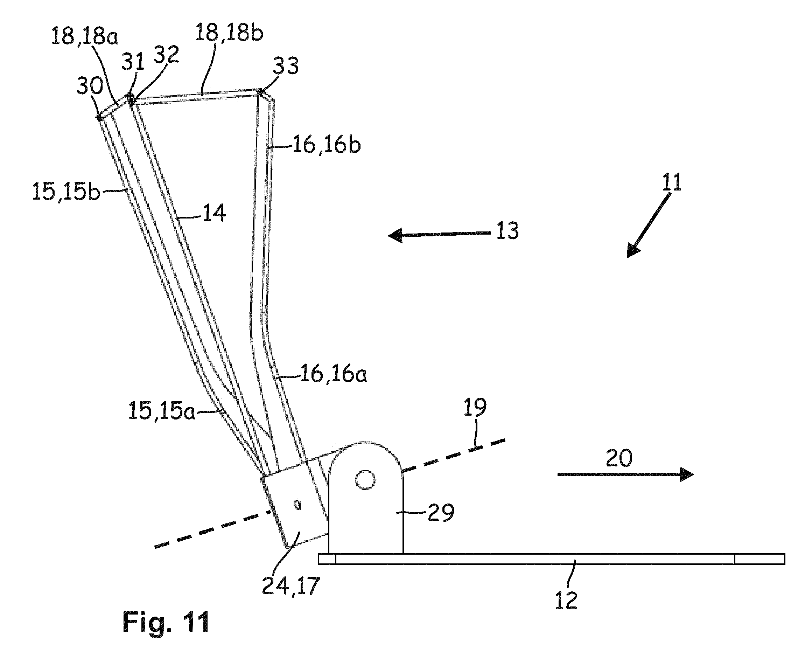

Wie insbesondere den Figuren 9 und 11 zu entnehmen ist, hat sich die linke Rückenlehnenlängsstrebe 15 dabei sowohl mit ihrem unteren Ende 15a als auch mit ihrem oberen Ende 15b in Bezug auf die Sitzlängsrichtung 20 nach hinten bewegt, während sich die rechte Rückenlehnenlängsstrebe 16 dabei sowohl mit ihrem unteren Ende 16a als auch mit ihrem oberen Ende 16b in Bezug auf die Sitzlängsrichtung 20 nach vorne bewegt hat. In Folge dieser Bewegung hat sich der gesamte Rückenlehnenrahmen 13 helixförmig verformt, da die Rückenlehnenlängsstreben 14, 15 und 16 an der unteren Querstrebe 17 an Ihren Drehpunkten mit Ausnahme der zugelassenen Drehbewegung fixiert und diesbezüglich festgelegte Orientierungen aufweisen.

### Bezugszeichenliste

- 11: Sitzrahmen
- 12: Sitzflächenrahmen
- 13: Rückenlehnenrahmen
- 14: mittlere Rückenlehnenlängsstrebe
- 15: linke Rückenlehnenlängsstrebe
- 15a: unteres Ende der linken Rückenlehnenlängsstrebe
- 15b: oberes Ende der linken Rückenlehnenlängsstrebe
- 16: rechte Rückenlehnenlängsstrebe
- 15a: unteres Ende der rechten Rückenlehnenlängsstrebe
- 15b: oberes Ende der rechten Rückenlehnenlängsstrebe
- 17: untere Querstrebe
- 18: obere Querstrebe
- 18a: Querstrebenteil
- 18b: Querstrebenteil
- 19: Achse
- 20: Sitzlängsrichtung
- 21: Achse
- 22: mittiger Bereich
- 23: abgewinkelter Bereich
- 24: abgewinkelter Bereich
- 25: Winkel
- 26: Achse
- 27: Achse
- 28: Winkel
- 29: Befestigungswinkel
- 30: Aufnahme
- 31: Aufnahme
- 32: Aufnahme
- 33: Aufnahme

## Patentansprüche

1. Fahrzeugsitz umfassend einen Sitzrahmen (11) mit einem Sitzflächenrahmen (12) und einem Rückenlehnenrahmen (13),
wobei
der Rückenlehnenrahmen (13) mindestens eine linke Rückenlehnenlängsstrebe (15) und mindestens eine rechte Rückenlehnenlängsstrebe (16) sowie eine obere Querstrebe (18) und gegebenenfalls eine untere Querstrebe (17) aufweiset,
**dadurch gekennzeichnet, dass** die rechte und die linke Rückenlehnenlängsstrebe (15, 16) gegen einen Widerstand unter Aufbau einer Rückstellkraft derart verschwenkbar an dem Sitzflächenrahmen (12) angeordnet sind, dass der Rückenlehnenrahmen (13) torsionsmäßig verdreht in seine Höhenrichtung deformierbar ist.

2. Fahrzeugsitz nach Anspruch 1,
**dadurch gekennzeichnet, dass**
der Rückenlehnenrahmen (13) eine mittlere Rückenlehnenlängsstrebe (14) aufweist, die um eine horizontale Achse (19) verschwenkbar an der unteren Querstrebe (17) befestigt ist und wobei die rechte und die linke Rückenlehnenlängsstrebe (15, 16) zumindest im Bereich ihrer oberen Enden (15b, 16b) außerhalb eines fiktiven durch eine 360° Drehung der mittleren Rückenlehnenlängsstrebe (14) gebildeten Flächenelementes angeordnet sind.

3. Fahrzeugsitz nach Anspruch 2,
**dadurch gekennzeichnet, dass**
die obere Querstrebe (18) in ein zwischen linker Rückenlehnenlängsstrebe (15) und mittlerer Rückenlehnenlängsstrebe (14) angeordnetes Querstrebenteil (18a) und ein zwischen rechter Rückenlehnenlängsstrebe (16) und mittlerer Rückenlehnenlängsstrebe (14) angeordnetes Querstrebenteil (18b) zweigeteilt ist.

4. Fahrzeugsitz nach einem der Ansprüche 2 oder 3,
**dadurch gekennzeichnet, dass**
das Querstrebeteil (18a) in Aufnahmen (30, 31) an der linker Rückenlehnenlängsstrebe (15) und der mittlerer Rückenlehnenlängsstrebe (14) und das das Querstrebeteil (18b) in Aufnahmen (32, 33) an der rechten Rückenlehnenlängsstrebe (15) und der mittlerer Rückenlehnenlängsstrebe (14), vorzugsweise gelenkig gehalten ist.

5. Fahrzeugsitz nach einem der vorhergehenden Ansprüche,
**dadurch gekennzeichnet, dass**
die untere Querstrebe (17) gegenüber dem Sitzflächenrahmen (12) um eine im Wesentlichen senkrecht zur Sitzlängsrichtung (20) verlaufende horizontale Achse (21) verschwenkbar ist.

6. Fahrzeugsitz nach einem der Ansprüche 2 - 4,
**dadurch gekennzeichnet, dass**
die untere Querstrebe (17) einen mittigen Bereich (22) aufweist, an dem die mittlere Rückenlehnenlängsstrebe (14) angeordnet ist, und zwei davon in Sitzlängsrichtung (20) um einem Winkel (25) abgewinkelte Bereiche (23, 24) aufweist, an denen die linke Rückenlehnenlängsstrebe (15) und die rechte Rückenlehnenlängsstrebe (16) angeordnet sind, wobei der Winkel (25) vorzugsweise 45° beträgt.

7. Fahrzeugsitz nacht Anspruch 6,
**dadurch gekennzeichnet, dass**
die linke Rückenlehnenlängsstrebe (15) um eine Achse (26) verschwenkbar an dem abgewinkelten Bereich (23) und die rechte Rückenlehnenlängsstrebe (16) um eine Achse (27) verschwenkbar an dem abgewinkelten Bereich (24) angeordnet ist.

8. Fahrzeugsitz nach einem der Ansprüche 2 - 4, 6, 7,
**dadurch gekennzeichnet, dass**
die mittlere Rückenlehnenlängsstrebe (14) im Wesentlichen flach als sich längserstreckendes Bauteil ausgebildet ist.

9. Fahrzeugsitz nach einem der vorhergehenden Ansprüche,
**dadurch gekennzeichnet, dass**
die linke Rückenlehnenlängsstrebe (15) im Wesentlichen flach ausgebildet ist, wobei sich deren oberes Ende (15b) gegenüber dem unteren Ende (15a) um einen Winkel (28) abgewinkelt ist, und dass die rechte Rückenlehnenlängsstrebe (16) im Wesentlichen flach ausgebildet ist, wobei sich deren oberes Ende (16b) gegenüber dem unteren Ende (16a) um einen Winkel (28) abgewinkelt ist.

10. Fahrzeugsitz nach einem der vorhergehenden Ansprüche,
**dadurch gekennzeichnet, dass**
die Rückenlehnenlängsstrebe (14, 15, 16) und/oder die Querstreben (17, 18) aus Metall oder Kunststoff bestehen.

11. Fahrzeugsitz nach einem der vorhergehenden Ansprüche,
**dadurch gekennzeichnet, dass**
die untere Querstrebe (17) als integraler Bestanteil des Sitzflächenrahmens (12) einstückig mit diesem beziehungsweise einem Teil davon ausgebildet ist.

12. Fahrzeugsitz nach einem der Ansprüche 5 - 10,
**dadurch gekennzeichnet, dass**
die untere Querstrebe (17) als separates Bauteil an dem Sitzflächenrahmen (12) angeordnet ist, vorzugsweise über Befestigungswinkel (29), in welchen sie verschwenkbar um die Achse (21) gehalten ist.

13. Fahrzeug mit wenigstens einem Fahrzeugsitz nach einem der Ansprüche 1 bis 11.

## Claims

1. Vehicle seat comprising a seat frame (11) having a seat surface frame (12) and a backrest frame (13),
the backrest frame (13) wherein at least one left backrest longitudinal strut (15) and at least one right backrest longitudinal strut (16) and an upper cross strut (18) and optionally a lower cross strut (17),
**characterised in that** the right and left backrest longitudinal struts (15, 16) are pivotally arranged on the seat surface frame (12) under a resistance, with a restoring force being built up, such that the backrest frame (13) is able to deform in the vertical direction thereof in a torsionally twisted manner.

2. Vehicle seat according to claim 1,
**characterised in that**
the backrest frame (13) comprises a central backrest longitudinal strut (14) which is attached to the lower cross strut (17) so as to be pivotable about a horizontal axis (19), and the right and left backrest longitudinal struts (15, 16) being arranged at least in the region of the upper ends (15b, 16b) thereof outside an imaginary element of area formed by a 360° rotation of the central backrest longitudinal strut (14).

3. Vehicle seat according to claim 2,
**characterised in that**
the upper cross strut (18) is divided in two, into a cross strut part (18a) arranged between the left backrest longitudinal strut (15) and the central backrest longitudinal strut (14) and a cross strut part (18b) arranged between the right backrest longitudinal strut (6) and the central backrest longitudinal strut (14).

4. Vehicle seat according to either claim 2 or claim 3,
**characterised in that**
the cross strut part (18a) is held, preferably in an articulated manner, in receiving portions (30, 31) on the left backrest longitudinal strut (15) and the central backrest longitudinal strut (14), and **in that** the cross strut part (18b) is held, preferably in an articulated manner, in receiving portions (32, 33) on the right backrest longitudinal strut (15) and the central backrest longitudinal strut (14).

5. Vehicle seat according to any of the preceding claims,
**characterised in that**
the lower cross strut (17) is pivotable with respect to the seat surface frame (12) about a horizontal axis (21) which extends substantially perpendicularly to the longitudinal direction (20) of the seat.

6. Vehicle seat according to any of claims 2 to 4,
**characterised in that**
the lower cross strut (17) comprises a central region (22), on which the central backrest longitudinal strut (14) is arranged, and two regions (23, 24) which are angled therefrom in the longitudinal direction (20) of the seat by an angle (25), on which regions the left backrest longitudinal strut (15) and the right backrest longitudinal strut (16) are arranged, the angle (25) preferably being 45°.

7. Vehicle seat according to claim 6,
**characterised in that** the left backrest longitudinal strut (15) is arranged on the angled region (23) so as to be pivotable about an axis (26) and the right backrest longitudinal strut (16) is arranged on the angled region (24) so as to be pivotable about an axis (27).

8. Vehicle seat according to any of claims 2 to 4, 6 and 7,
**characterised in that**
the central backrest longitudinal strut (14) is formed in a substantially planar manner as a longitudinally extending component.

9. Vehicle seat according to any of the preceding claims,
**characterised in that**
the left backrest longitudinal strut (15) is substantially planar, the upper end (15b) thereof being angled by an angle (28) with respect to the lower end (15a), and **in that** the right backrest longitudinal strut (16) is substantially planar, the upper end (16b) thereof being angled by an angle (28) with respect to the lower end (16a).

10. Vehicle seat according to any of the preceding claims,
**characterised in that**
the backrest longitudinal struts (14, 15, 16) and/or the cross struts (17, 18) consist of metal or plastics material.

11. Vehicle seat according to any of the preceding claims,
**characterised in that**
the lower cross strut (17) is designed as an integral component of the seat surface frame (12), either integrally or as a part thereof respectively.

12. Vehicle seat according to any of claims 5 to 10,
**characterised in that**
the lower cross strut (17) is arranged as a separate component on the seat surface frame (12), preferably by means of angle brackets (29) in which said cross strut is held so as to be pivotable about the axis (21).

13. Vehicle comprising at least one vehicle seat according to any of claims 1 to 11.

## Revendications

1. Siège de véhicule comprenant un cadre de siège (11) avec un cadre de surface de siège (12) et un cadre de dossier (13),
le cadre de dossier (13) comprenant au moins un croisillon longitudinal de dossier gauche (15) et au moins un croisillon longitudinal de dossier droit (16) et un croisillon transversal supérieur (18) et, le cas échéant, un croisillon transversal inférieur (17), **caractérisé en ce que** les croisillons longitudinaux de dossiers droit et gauche (15, 16) sont disposés de manière pivotante contre une résistance sous l'action d'une force de rappel contre le cadre de surface de siège (12) de façon à ce que le cadre de dossier (13) soit déformable en torsion dans la direction de la hauteur.

2. Siège de véhicule selon la revendication 1,
**caractérisé en ce que**
le cadre de dossier (13) comprend un croisillon longitudinal de dossier central (14) qui est fixé de manière pivotante autour d'un axe horizontal (19) au croisillon transversal inférieur (17) et les croisillons longitudinaux de dossiers droit et gauche (15, 16) sont disposés, au moins au niveau de leurs extrémités supérieures (15b, 16b), à l'extérieur d'un élément de surface fictif formé par une rotation de 360° du croisillon longitudinal de dossier central (14).

3. Siège de véhicule selon la revendication 2,
**caractérisé en ce que**
le croisillon transversal supérieur (18) est divisé en une partie de croisillon transversal (18a) disposée entre le croisillon longitudinal de dossier gauche (15) et le croisillon longitudinal de dossier central (14) et une partie de croisillon transversal (18b) disposée entre le croisillon longitudinal de dossier droit (16) et le croisillon longitudinal de dossier central (14).

4. Siège de véhicule selon l'une des revendications 2 ou 3,
**caractérisé en ce que**
la partie de croisillon transversal (18a) est maintenu, de préférence de manière articulée, dans des logements (30, 31) sur le croisillon longitudinal de dossier gauche (15) et sur le croisillon longitudinal de dossier central (14) et la partie de croisillon transversal (18b) est maintenu, de préférence de manière articulée, dans des logements (32, 33) sur le croisillon longitudinal de dossier droit (16) et sur le croisillon longitudinal de dossier central (14).

5. Siège de véhicule selon l'une des revendications précédentes,
**caractérisé en ce que**
le croisillon transversal inférieur (17) est pivotant par rapport au cadre de surface de siège (12) autour d'un axe horizontal (21) s'étendant essentiellement perpendiculairement par rapport à la direction longitudinale du siège (20).

6. Siège de véhicule selon l'une des revendications 2 à 4,
**caractérisé en ce que**
le croisillon transversal inférieur (17) comprend une zone centrale (22) sur laquelle est disposé le croisillon longitudinal de dossier central (14) et deux zones pliées (23, 24) formant avec celle-ci un angle (25) dans la direction longitudinale du siège (20), sur lesquelles le croisillon longitudinal de dossier gauche (15) et le croisillon longitudinal de dossier droit (16) sont disposés, l'angle (25) étant de préférence égal à 45°.

7. Siège de véhicule selon la revendication 6,
**caractérisé en ce que**
le croisillon longitudinal de dossier gauche (15) est disposé de manière pivotante autour d'un axe (26) sur la zone pliée (23) formant un angle et le croisillon longitudinal de dossier droit (16) est disposé de manière pivotante autour d'un axe (27) sur la zone pliée (24).

8. Siège de véhicule selon l'une des revendications 2 à 4, 6, 7,
**caractérisé en ce que**
le croisillon longitudinal de dossier central (14) est conçu de manière essentiellement plane comme un composant s'étendant dans la direction longitudinale.

9. Siège de véhicule selon l'une des revendications précédentes,
**caractérisé en ce que**
le croisillon longitudinal de dossier gauche (15) est conçu de manière essentiellement plane, son extrémité supérieure (15b) formant avec l'extrémité inférieure (15a) un angle (28) et **en ce que** le croisillon longitudinal de dossier droit (16) est conçu de manière essentiellement plane, son extrémité supérieure (16b) forme, par rapport à l'extrémité inférieure (16a), un angle (28).

10. Siège de véhicule selon l'une des revendications précédentes,
**caractérisé en ce que**
le croisillon longitudinal de dossier (14, 15, 16) et/ou les croisillons transversaux (17, 18) sont constitués de métal ou de matière plastique.

11. Siège de véhicule selon l'une des revendications précédentes,
**caractérisé en ce que**
le croisillon transversal inférieur (17) est conçu comme une partie intégrante du cadre de surface de siège (12) d'une seule pièce avec celui-ci ou une partie de celui-ci.

12. Siège de véhicule selon l'une des revendications 5 à 10,
**caractérisé en ce que**
le croisillon transversal inférieur (17) est disposé comme un composant séparé sur le cadre de surface de siège (12), de préférence par l'intermédiaire d'un angle de fixation (29), dans lequel il est maintenu de manière pivotante autour de l'axe (21).

13. Véhicule avec au moins un siège de véhicule selon l'une des revendications 1 à 11.
